# EUROPEAN PATENT APPLICATION

(11) **EP 4 199 589 A1**
(43) Date of publication of application: **21.06.2023**
(21) Application number: 22201253.6
(22) Date of filing: 13.10.2022
(51) Int. Cl.: H04W 36/00, H04W 36/32, G06N 20/00

(54) **HANDOVER PROCESSES BASED ON PROBABILITY**

(30) Priority: 17.12.2021 US 202117553848
(71) Applicant: Intel Corporation, Santa Clara, CA 95054 (US)
(72) Inventor: SIVANESAN, Kathiravetpillai, Portland, OR 97229 (US); VANNITHAMBY, Rath, Portland, OR 97229 (US)
(74) Representative: Viering, Jentschura & Partner mbB Patent- und Rechtsanwälte

(57) **Abstract**

A mobile device may include a processor. The processor may be configured to determine a plurality of channel measurements of a serving channel and a candidate channel. The serving channel may include a channel between the mobile device and a serving base station. The candidate channel may include a channel between the mobile device and a candidate base station. The processor may also determine a probability of a handover (HO) condition based on the plurality of channel measurements. Responsive to the probability of the HO condition exceeding a threshold value, the processor may provide a HO request message to the serving base station to initiate a HO process for the mobile device to connect to the candidate base station.

## Description

### FIELD

The aspects discussed in the present disclosure are related to handover processes.

### BACKGROUND

Unless otherwise indicated in the present disclosure, the materials described in the present disclosure are not prior art to the claims in the present application and are not admitted to be prior art by inclusion in this section.

A handover (HO) may transfer service of a mobile device from a serving base station (BS) (e.g., a serving cell) to a target BS (e.g., a target cell). The HO may occur based on settings within the mobile device, the serving BS, the target BS, or some combination thereof. During the HO, the serving BS may instruct the mobile device to transfer data transmissions from the serving BS to the target BS. The mobile device, after the HO, may transfer data to and receive data from the target BS (e.g., updated BS).

The subject matter claimed in the present disclosure is not limited to aspects that solve any disadvantages or that operate only in environments such as those described above. Rather, this background is only provided to illustrate one example technology area where some aspects described in the present disclosure may be practiced.

### BRIEF DESCRIPTION OF THE DRAWINGS

Example aspects will be described and explained with additional specificity and detail through the use of the accompanying drawings in which:
FIG. 1 illustrates a block diagram of an exemplary operational environment for a mobile device to perform a HO from a serving BS to a target BS;
FIG. 2 illustrates an exemplary message sequence chart for a HO process;
FIG. 3 illustrates a graphical representation of simulated RSRP of the serving channel and the target channel;
FIG. 4 illustrates an exemplary message sequence chart for the mobile device to predict and perform the HO by determining the probability of the HO condition;
FIG. 5 illustrates a graphical representation of simulated RSRP of the serving channel and the target channel;
FIG. 6 illustrates a flowchart of an exemplary method to determine the probability of the HO condition and initiate the HO; and
FIG. 7 illustrates a flowchart of an exemplary method to determine the probability of the HO condition and prepare a candidate BS for the HO,
   all according to at least one aspect described in the present disclosure.

### DETAILED DESCRIPTION

A HO may transfer service of a mobile device from a serving BS (e.g., a serving cell) to a target BS (e.g., a target cell) without causing a service interruption. The HO may occur based on settings within the mobile device, the serving BS, the target BS, or some combination thereof.

The mobile device may determine channel measurements of one or more channels between the mobile device and the serving BS and another one or more channels between the mobile device and the target BS. For example, the mobile device may determine signal power, channel quality, or some combination thereof of the corresponding channels over a range of frequencies. The mobile device may determine the channel measurements in layer 1 (e.g., a physical layer) and layer 3 (e.g., a network layer) of the mobile device. The channel measurements may include a reference signal receive power (RSRP), a reference signal received quality (RSRQ), or some combination thereof.

The mobile device may reduce an impact of fading in the channel measurements by performing sampling of reference signals as a linear average over power contributions (e.g., layer 1 filtering). The mobile device may update and average the filtered channel measurements through a first-order infinite impulse response (IIR) filter to further reduce the impact of fading (e.g., layer 3 filtering).

The mobile device may provide a measurement report to the serving BS that includes the channel measurements. The mobile device may provide the measurement report based on event triggers. For example, the mobile device may provide the measurement report based on the RSRP of the channel between the mobile device and the serving BS dropping below a threshold value.

The serving BS may receive the measurement report. The serving BS may perform a HO decision to determine if the HO should occur based on the channel measurements and other information. The HO decision may be based on one or more triggers such as hysteresis, offsets, time-to-trigger (TTT), layer 3 filtering, or some combination thereof. Hysteresis may include a path loss difference between inbound and outbound HOs between a pair of cells. The hysteresis may reduce a frequency at which the mobile device switches between the cells. The offsets may cause relative signal strength levels of the triggers at the mobile device to be changed. TTT may include an amount of time the mobile device is to wait before sending the measurement report to the serving BS. Layer 3 filtering may be network-configurable filtering that is applied to implementation-specific RSRP measurements.

The serving BS may confirm availability of resources within the target BS. For example, the serving BS may perform backhaul message exchanges with the target BS requesting availability of the resources. The serving BS, responsive to the target BS including sufficient resources, may instruct the mobile device to transition data transmissions to the target BS. The mobile device, after the HO, may transfer data to and receive data from the target BS (e.g., updated serving BS) and disconnect from the serving BS.

A radio frequency (RF) band spectrum may be limited and a number of service verticals within a cellular network may exceed a number of available channels. Higher frequency bands (e.g., cm-waves, mm-waves, or some combination thereof) may be implemented to provide additional channels. A physical area that a cell of the cellular network can provide coverage to may be reduced as the frequency increases, which may limit cell coverage. To cover a larger physical area, the number of cells (e.g., the number of BSs) may be increased accordingly (e.g., the cellular network may include pico-cells, micro-cells, or some combination thereof).

The mobile device may move between physical areas and may leave one cell and enter a neighboring cell (e.g., an adjacent cell or a target cell). The HO process may permit the mobile device to transition to the neighboring cell without losing service.

Some aspects described in the present disclosure may determine a probability of a HO condition prior to the HO condition occurring to reduce processing complexity, reduce signaling overhead, and improve HO reliability. The mobile device may determine the channel measurements and use a HO algorithm to determine the probability of the HO condition. The channel measurements may include the RSRP, the RSRQ, an in phase and out of phase (IQ) sample, a fast Fourier transform (FFT) measurement, or some combination thereof. Responsive to the probability of the HO condition exceeding a threshold value, the mobile device may provide a HO request message to the serving BS to initiate the HO process.

In addition, the serving BS may receive the channel measurements and use the HO algorithm to determine the probability of the HO condition. The probability of the HO condition may be further based on context information including a physical location of the mobile device, a physical speed of the mobile device, a user preference, an offset value, a hysteresis setting, or some combination thereof. Responsive to the probability of the HO condition exceeding the threshold value, the serving BS may provide a HO preparation message to the target BS to cause the target BS to prepare for the HO process prior to receiving the HO request message from the mobile device.

The HO algorithm implemented by the mobile device or the serving BS may include a machine learning (ML) algorithm, an artificial intelligence (AI) algorithm, or some combination thereof. The HO algorithm may include a q-learning algorithm, a deep q-learning algorithm, a Markov decision process algorithm, a recurrent neural network (RNN) algorithm, a reinforcement learning algorithm, or some combination thereof. The HO algorithm may be configured based on a HO interruption time setting, a system throughput setting, or any other appropriate setting.

The mobile device may include a processor. The mobile device may determine channel measurements of a serving channel and a target channel (e.g., a candidate channel). The serving channel may include a channel between the mobile device and the serving BS. The target channel may include a channel between the mobile device and the target BS (e.g., a candidate BS). The mobile device may determine the probability of the HO condition based on the channel measurements. The mobile device, responsive to the probability of the HO condition exceeding a threshold value, may provide the HO request message to the serving BS to initiate the HO process. The HO process may cause the mobile device to connect to the target BS.

The serving BS may form part of a network. The serving BS may include a processor. The serving BS may receive a channel measurement dataset. The channel measurement dataset may include the channel measurements of the serving channel and the target channel. The serving BS may determine the probability of the HO condition based on the channel measurements. The serving BS, responsive to the probability of the HO condition exceeding the threshold value, may provide a HO preparation message to the target BS. The HO preparation message may cause the target BS to prepare for the HO process.

One or more aspects described in the present disclosure may reduce an HO interruption time, increase system throughput, reduce radio link failures, reduce signaling overhead, reduce processing power consumption, or some combination thereof. In addition, one or more aspects described in the present disclosure may avoid a ping pong effect in which the mobile device transitions back and forth between the serving BS and the target BS.

These and other aspects of the present disclosure will be explained with reference to the accompanying figures. It is to be understood that the figures are diagrammatic and schematic representations of such example aspects, and are not limiting, nor are they necessarily drawn to scale. In the figures, features with like numbers indicate like structure and function unless described otherwise.

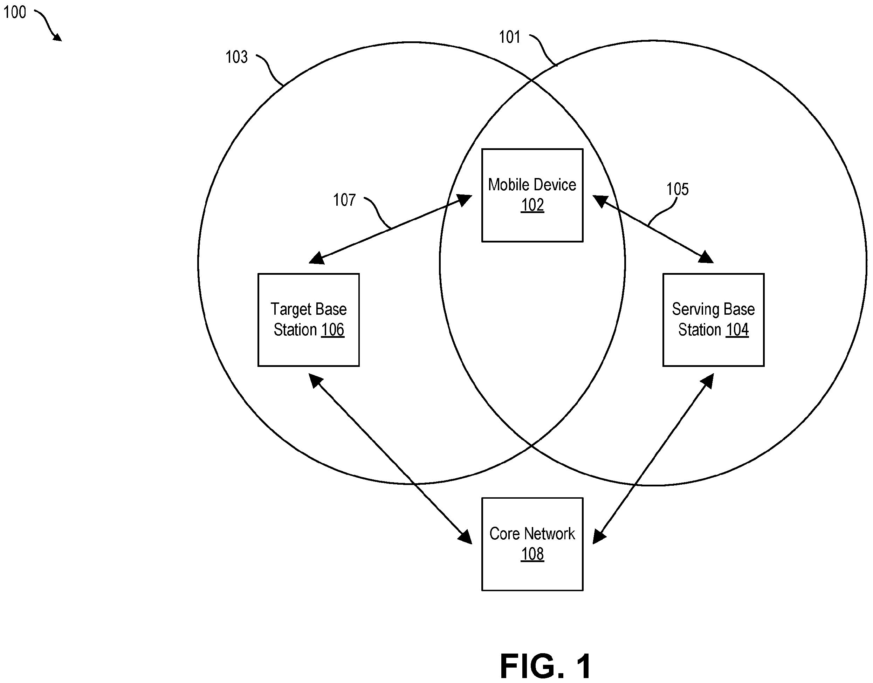

FIG. 1 illustrates a block diagram of an exemplary operational environment 100 for a mobile device 102 to perform a HO from a serving BS 104 to a target BS 106, in accordance with at least one aspect described in the present disclosure.

The operational environment 100 may include a serving cell 101, a target cell 103, and a core network 108. The serving cell 101 may correspond to a physical area of coverage provided by the serving BS 104. In addition, the target cell 103 may correspond to a physical area of coverage provided by the target BS 106.The serving cell 101 and the target cell 103 may form a network maintained by the core network 108.

The mobile device 102 may include, or may be implemented, partially or entirely, by circuitry and/or logic. Additionally or alternatively, one or more functionalities of the mobile device 102 may be implemented by logic, which may be executed by a machine and/or one or more processors. The mobile device 102 may include at least one memory (not illustrated in FIG. 1), which may be configured to store at least some of the information processed by the mobile device 102. Examples of the mobile device 102 may include, but are not limited to, a smartphone, a laptop computer, a computing device, a tablet computer, a mobile phone, a personal digital assistant (PDA), an e-reader device, or any other suitable computing device.

The serving BS 104 may include or may be implemented, partially or entirely, by circuitry and/or logic. Additionally or alternatively, one or more functionalities of the serving BS 104 may be implemented by logic, which may be executed by a machine and/or one or more processors. The serving BS 104 may include at least one memory (not illustrated in FIG. 1), which may be configured to store at least some of the information processed by the serving BS 104. Examples of the serving BS 104 may include, but are not limited to, desktop computer, a laptop computer, a computer work-station, a computing device, a mainframe machine, a server, such as a cloud server, and a group of servers. The serving BS 104 may form part of a cellular network tower.

The mobile device 102 may determine channel measurements of a serving channel 105 and a target channel (e.g., a candidate channel) 107. The serving channel 105 may include a channel between the mobile device 102 and the serving BS 103. The serving channel 105 is illustrated in FIG. 1 using a single arrow for example purposes. The serving channel 105 may include multiple serving channels 105 and the mobile device 102 may determine the channel measurements of one or more of the serving channels 105. The target channel 107 may include a channel between the mobile device 102 and the target BS 106. The target channel 106 is illustrated in FIG. 1 using a single arrow for example purposes. The target channel 107 may include multiple target channels 107 and the mobile device 102 may determine the channel measurements of one or more of the target channels 107.

The mobile device 102 may determine the probability of the HO condition. The mobile device 102 may determine the probability of the HO condition based on the channel measurements. The mobile device 102 may determine the probability of the HO condition based on the channel measurements of the serving channel 105, the target channel 107, or some combination thereof.

The mobile device 102 may implement a ML algorithm, an AI algorithm, or some combination thereof (generally referred to in the present disclosure as an HO algorithm) to determine the probability of the HO condition. The mobile device 102 may select the HO algorithm based on a physical location of the mobile device 102, a cell type of the network, or some combination thereof.

The mobile device 102 may receive a training channel measurement dataset from the serving BS 104. The mobile device 102 may train the HO algorithm using the training channel measurement dataset. The mobile device 102 may train the HO algorithm based on a HO interruption time setting, a system throughput setting, a quality of service (QoS) setting, or some combination thereof.

The mobile device 102 may determine a confidence level of the probability of the HO condition. The probability of the HO condition may be further based on the confidence level of the probability of the HO condition.

The mobile device 102, responsive to the probability of the HO condition exceeding the threshold value, may provide the HO request message to the serving BS 104. The HO request message may initiate the HO process for the mobile device 102 transition from the serving BS 104 to the target BS 106. Alternatively, the mobile device 102, responsive to the probability of the HO condition not exceeding the threshold value, may wait for an AI interval of time to elapse. The AI interval of time may be pre-defined. The mobile device 102, responsive to the AI interval of time elapsing, may determine updated channel measurements of the serving channel 105 and the target channel 107.

The serving BS 104 may receive the channel measurement dataset from the mobile device 102. The channel measurement dataset may include the channel measurements of the serving channel 105 and the target channel 107. The serving BS 104 may determine the probability of the HO condition based on the channel measurements. The serving BS 104 may implement the HO algorithm to determine the probability of the HO condition. The serving BS 104 may select the HO algorithm based on the physical location of the mobile device 102, the cell type of the network, or some combination thereof.

The serving BS 104 may train the HO algorithm using the training channel measurement dataset. The mobile device 102 may train the HO algorithm based on the HO interruption time setting, the system throughput setting, the QoS setting, or some combination thereof.

The serving BS 104 may continuously receive the channel measurement dataset from the mobile device 102. The serving BS 104 may also continuously train the HO algorithm using the continuously received channel measurement dataset.

The serving BS 104, responsive to the probability of the HO condition exceeding the threshold value, may provide a HO preparation message to the target BS 106. The HO preparation message may cause the target BS 106 to prepare for the HO process for the mobile device 102 to connect to the target BS 106.

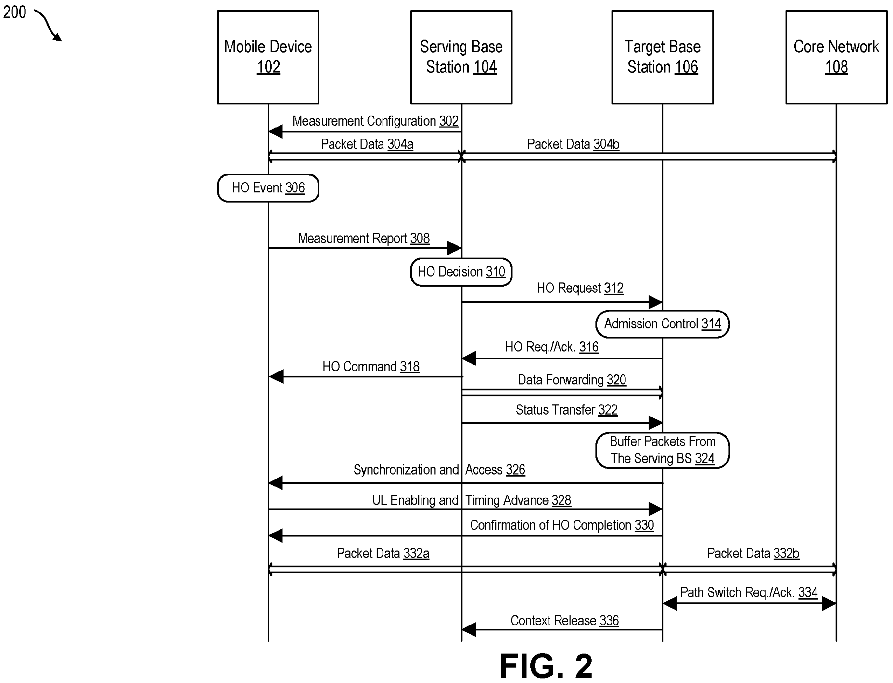

FIG. 2 illustrates an exemplary message sequence chart 200 for a HO process, in accordance with at least one aspect described in the present disclosure. The messages of the message sequence chart 200 may be transmitted and received by any suitable system, apparatus, or device with respect to the HO process. For example, the mobile device 102, the serving BS 104, the target BS 106, and the core network 108 may transmit and receive the messages of the message sequence chart 200.

The serving BS 104 may provide a measurement configuration message 302 to the mobile device 102. The measurement configuration message 302 may indicate which channel measurements the mobile device 102 is to determine. The mobile device 102 and the serving BS 104 may transmit and receive packet data 304a. In addition, the serving BS 104 and the core network 108 may transmit and receive packet data 304b.

The mobile device 102 may determine when a HO event 306 occurs. The mobile device 102 may determine the HO event 306 occurs based on the channel measurements that the mobile device 102 was instructed to determine. For example, the HO event 306 may include the target channel becoming more reliable than the serving channel. The HO event 306 may include determining if a HO entering condition is met. For example, the HO entering condition may include a hysteresis of the target channel being greater than a system wide common offset parameter. The HO event 306 may include determining if a HO leaving condition is met. For example, the HO leaving condition may include the hysteresis of the target channel being less than the system wide common offset parameter. The channel measurement of the target channel may not take into account offsets and may include measured decibels or decibels milliwatts (dBm). The channel measurement of the serving channel may not take into account offsets and may include measured decibels or dBm.

The mobile device 102 may provide a measurement report message 308 to the serving BS 104. The mobile device 102 may provide the measurement report message 308 after a time to trigger period of time elapses. The measurement report message 308 may include the target channel as part of a target cell measurement report if the HO entering condition is met. The measurement report message 308 may not include the target channel as part of the target cell measurement report if the HO leaving condition is met. The measurement report may include the channel measurements.

The serving BS 104 may determine a HO decision 310. The HO decision 310 may include determining whether the HO should occur. If the HO is to occur, the serving BS 104 may provide a HO request message 312 to the target BS 106. The HO request message 312 may include a request to indicate available resources within the target BS 106. In addition, the HO request message 312 may request that the target BS 106 authorizes the HO.

The target BS 106 may perform admission control 314. During the admission control 314, the target BS 106 may determine if sufficient resources are available for the mobile device 102. The target BS 106 may provide a HO request and acknowledge (Req./Ack.) message 316 to the serving BS 104. The HO Req./Ack. message 316 may indicate that the HO is authorized. The serving BS 104 may then provide a HO command message 318 to the mobile device 102. The HO command message 318 may instruct the mobile device to 102 transition to the target BS 106.

The serving BS 104 may provide a data forwarding message 320 to the target BS 106. The data forwarding message 320 may include packets received from the mobile device 102 after the HO Req./Ack. message 316 but before the HO is complete. The serving BS 104 may provide the data forwarding message 320 to the target BS 106 via backhaul messaging. The serving BS 104 may also provide a status transfer message 322 to the target BS 106. The status transfer message 322 may request transfer of status of the serving BS 104 and the target BS 106.

The target BS 106 may buffer packets from the serving BS 324. The target BS 106 may buffer the packets received in the data forwarding message 320. The mobile device 102 and the target BS 106 may provide and receive synchronization and access messages 326. The synchronization and access messages 326 may be transmitted and received via a random-access channel (RACH).

The mobile device 102 may provide an uplink (UL) enabling and timing advance message 328 to the target BS 106. The UL enabling and timing advance message 328 may enable the UL between the mobile device 102 and the target BS 106. In addition, the UL enabling and timing advance message 328 may advance timing of the UL.

The mobile device 102 may provide a confirmation of HO completion message 330 to the target BS 106 to indicate the HO process is complete. The mobile device 102 and the target BS 106 may transmit and receive packet data 332a. In addition, the target BS 106 and the core network 108 may transmit and receive packet data 332b. The target BS 106 and the core network 108 may provide and receive path switch Req./Ack. messages 334. The target BS 106 may provide a context release message 336 to the serving BS 104 to release context of the mobile device 102.

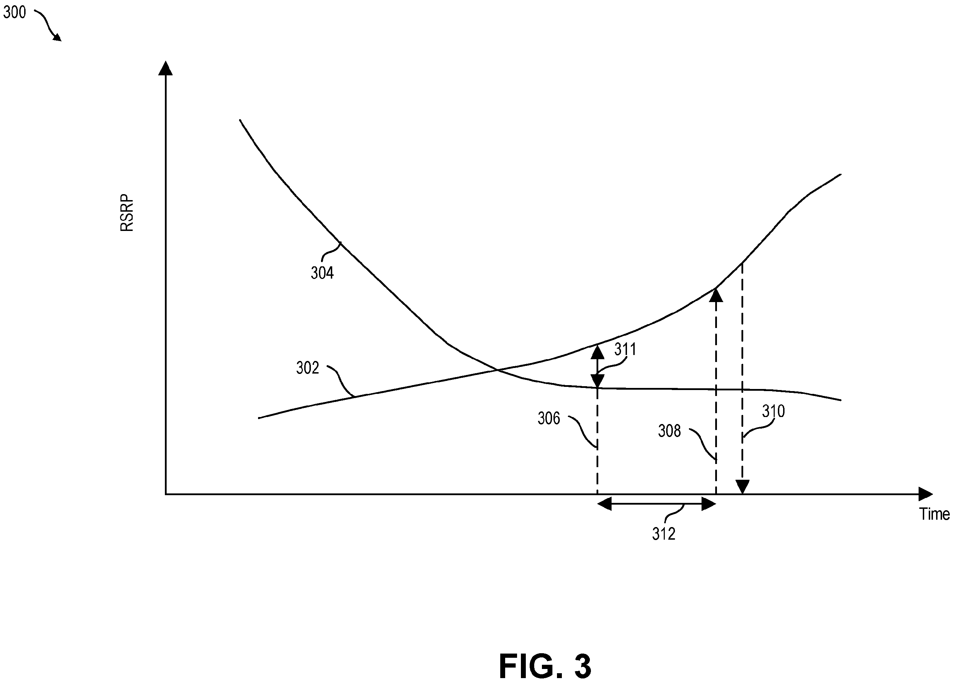

FIG. 3 illustrates a graphical representation 300 of simulated RSRP of the serving channel 105 and the target channel 107, in accordance with at least one aspect described in the present disclosure. In FIG. 3, curve 302 may represent the RSRP of the target channel 107 and curve 304 may represent the RSRP of the serving channel 105.

As illustrated in FIG. 3, the RSRP of the target channel 107 (e.g., curve 302) generally increases over time while the RSRP of the serving channel 105 (e.g., curve 304) generally decreases over time. The mobile device 102 may determine if a HO threshold 311 occurs. For example, as illustrated in FIG. 3, the HO threshold 311 may occur when curve 304 is a particular distance below curve 302 (e.g., when the RSRP of the target channel 107 is greater than the RSRP of the serving channel 105 by a particular amount). The HO threshold 311 may coincide with a measurement trigger 306. When the measurement trigger 306 occurs, the mobile device 102 may determine the channel measurements to include in the measurement report.

After a time to trigger period of time 312 elapses, the mobile device 102 may provide the measurement report 308. After another period of time, the mobile device 102 may receive the HO command 310 from the serving BS 104.

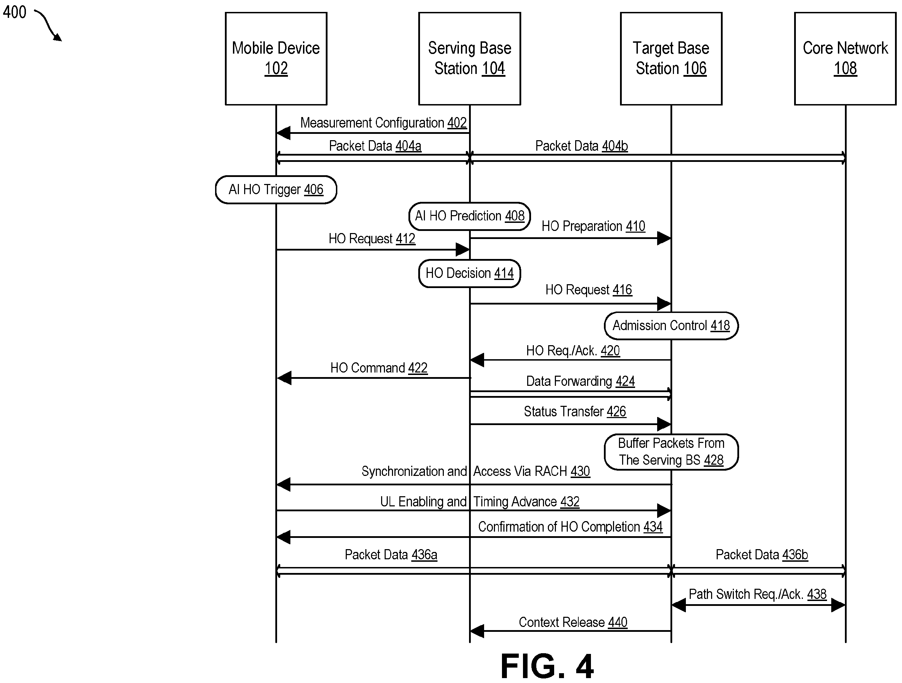

FIG. 4 illustrates an exemplary message sequence chart 400 for the mobile device 102 to predict and perform the HO by determining the probability of the HO condition, in accordance with at least one aspect described in the present disclosure. The messages of the message sequence chart 400 may be transmitted and received by any suitable system, apparatus, or device with respect to the HO process. For example, the mobile device 102, the serving BS 104, the target BS 106, and the core network 108 may transmit and receive the messages of the message sequence chart 400.

The serving BS 104 may provide a measurement configuration message 402 to the mobile device 102. The measurement configuration message 402 may indicate which channel measurements the mobile device 102 is to determine. The mobile device 102 and the serving BS 104 may transmit and receive packet data 404a. In addition, the serving BS 104 and the core network 108 may transmit and receive packet data 404b.

The mobile device 102 may perform AI HO trigger 406. The mobile device 102, for the AI HO trigger 406, may determine the probability of the HO condition. The mobile device 102 may determine the probability of the HO condition based on the channel measurements.

The mobile device 102 may implement the HO algorithm to determine the probability of the HO condition. The mobile device 102 may determine the confidence level of the probability of the HO condition. The probability of the HO condition may be further based on the confidence level of the probability of the HO condition.

The serving BS 104 may perform AI HO prediction 408. The serving BS 104 may receive the channel measurement dataset from the mobile device 102. The serving BS 104 may determine the probability of the HO condition based on the channel measurements included in the channel measurement datasets. The serving BS 104 may implement the HO algorithm thereof to determine the probability of the HO condition. The serving BS 104 may select the HO algorithm based on the physical location of the mobile device 102, the cell type of the network, or some combination thereof.

The serving BS 104, responsive to the probability of the HO condition exceeding the threshold value, may provide a HO preparation message 410 to the target BS 106. The HO preparation message 410 may cause the target BS 106 to prepare for the HO process for the mobile device 102 to connect to the target BS 106.

The mobile device 102, responsive to the probability of the HO condition exceeding the threshold value, may provide a HO request message 412 to the serving BS 104. The HO request message may initiate the HO process for the mobile device 102 to transition from the serving BS 104 to the target BS 106.

The serving BS 104 may determine a HO decision 414. The HO decision 414 may include determining whether the HO should occur. If the HO is to occur, the serving BS 104 may provide a HO request message 416 to the target BS 106. The HO request message 416 may include a request to indicate available resources within the target BS 106. In addition, the HO request message 416 may request that the target BS 106 authorizes the HO.

The target BS 106 may perform admission control 418. During the admission control 418, the target BS 106 may determine if sufficient resources are available for the mobile device 102. The target BS 106 may provide a HO Req./Ack. message 420 to the serving BS 104. The HO Req./Ack. message 420 may indicate that the HO is authorized. The serving BS 104 may then provide a HO command message 422 to the mobile device 102. The HO command message 422 may instruct the mobile device 102 to transition to the target BS 106.

The serving BS 104 may provide a data forwarding message 424 to the target BS 106. The data forwarding message 424 may include packets received from the mobile device 102 after the HO Req./Ack. message 420 but before the HO is complete. The serving BS 104 may provide the data forwarding message 424 to the target BS 106 via backhaul messaging. The serving BS 104 may also provide a status transfer message 426 to the target BS 106. The status transfer message 426 may request transfer of status of the serving BS 104 and the target BS 106.

The target BS 106 may buffer packets from the serving BS 428. The target BS 106 may buffer the packets received in the data forwarding message 424. The mobile device 102 and the target BS 106 may provide and receive synchronization and access messages 430. The synchronization and access messages 326 may be transmitted and received via the RACH.

The mobile device 102 may provide a UL enabling and timing advance message 432 to the target BS 106. The UL enabling and timing advance message 432 may enable the UL between the mobile device 102 and the target BS 106. In addition, the UL enabling and timing advance message 432 may advance timing of the UL.

The mobile device 102 may provide a confirmation of HO completion message 434 to the target BS 106 to indicate the HO process is complete. The mobile device 102 and the target BS 106 may transmit and receive packet data 436a. In addition, the target BS 106 and the core network 108 may transmit and receive packet data 436b. The target BS 106 and the core network 108 may provide and receive path switch Req./Ack. messages 438. The target BS 106 may provide a context release message 440 to the serving BS 104 to release context of the mobile device 102.

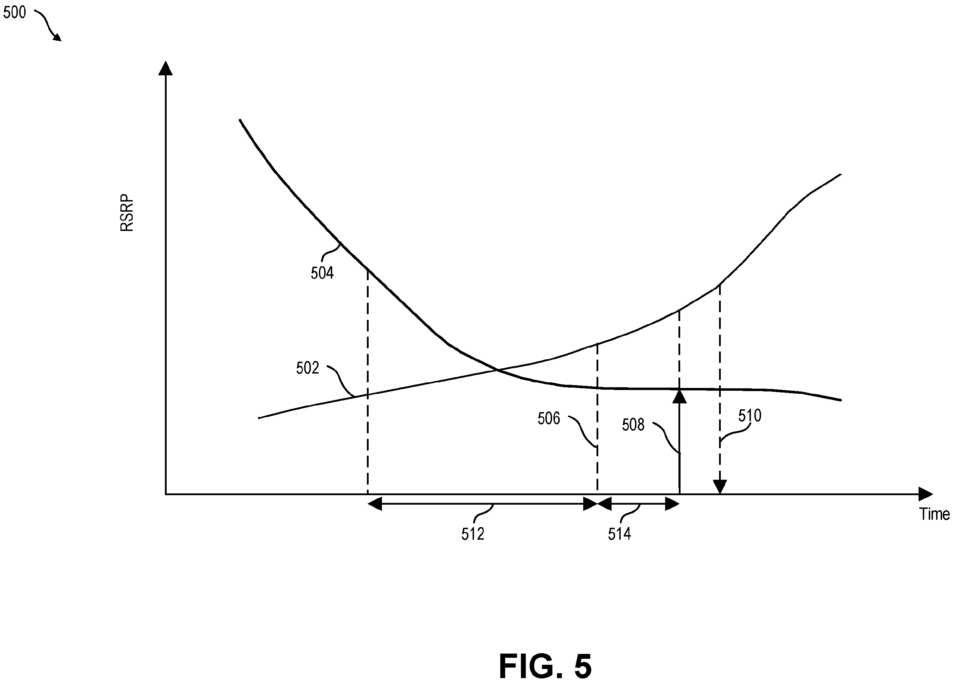

FIG. 5 illustrates a graphical representation 500 of simulated RSRP of the serving channel 105 and the target channel 107, in accordance with at least one aspect described in the present disclosure. In FIG. 5, curve 502 may represent the RSRP of the target channel 107 and curve 504 may represent the RSRP of the serving channel 105.

As illustrated in FIG. 5, the RSRP of the target channel 107 (e.g., curve 502) generally increases over time while the RSRP of the serving channel 105 (e.g., curve 504) generally decreases over time. The mobile device 102 may determine the probability of the HO condition 506 after an AI interval of time 512 elapses. The AI interval of time 512 elapsing may trigger a time delay to trigger the HO 514. After the time delay to trigger 514 elapsing, the mobile device 102 may provide a HO request 508. After another period of time, the mobile device 102 may receive the HO command 510 from the serving BS 104.

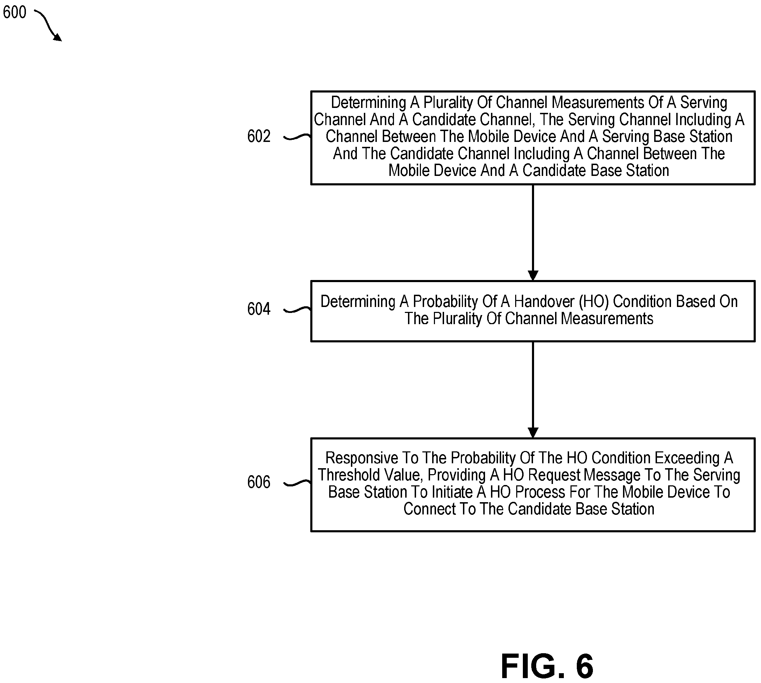

FIG. 6 illustrates a flowchart of an exemplary method 600 to determine the probability of the HO condition and initiate the HO, in accordance with at least one aspect described in the present disclosure. The method 600 may include determining a plurality of channel measurements of a serving channel and a candidate channel, the serving channel including a channel between the mobile device and a serving base station and the candidate channel including a channel between the mobile device and a candidate base station 602; determining a probability of a HO condition based on the plurality of channel measurements 604; and responsive to the probability of the HO condition exceeding a threshold value, providing a HO request message to the serving base station to initiate a HO process for the mobile device to connect to the candidate base station 606.

Modifications, additions, or omissions may be made to the method 600 without departing from the scope of the present disclosure. For example, the operations of method 600 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the described aspects.

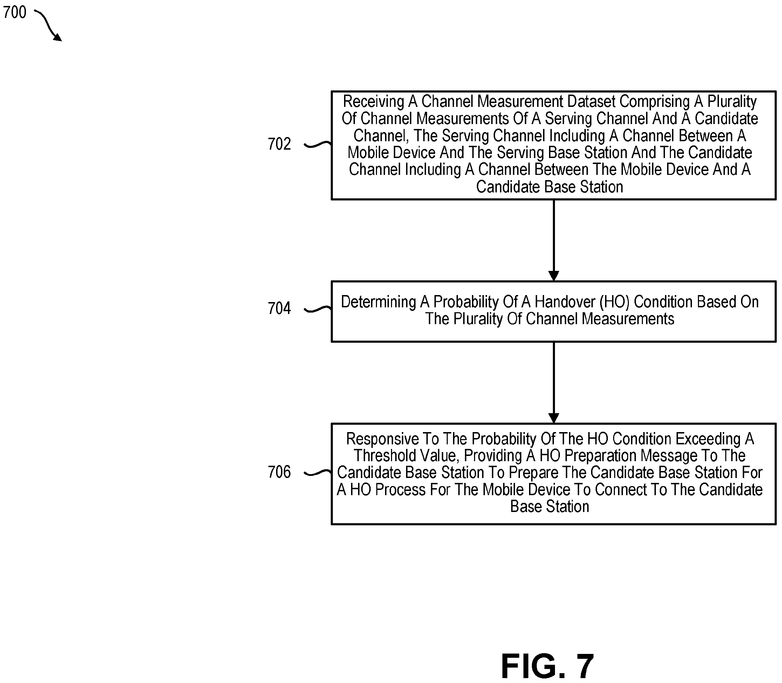

FIG. 7 illustrates a flowchart of an exemplary method to determine the probability of the HO condition and prepare a candidate base station for the HO, in accordance with at least one aspect described in the present disclosure. The method 700 may include receiving a channel measurement dataset including a plurality of channel measurements of a serving channel and a candidate channel, the serving channel including a channel between a mobile device and the serving base station and the candidate channel including a channel between the mobile device and a candidate base station 702; determining a probability of a HO condition based on the plurality of channel measurements 704; and responsive to the probability of the HO condition exceeding a threshold value, providing a HO preparation message to the candidate base station to prepare the candidate base station for a HO process for the mobile device to connect to the candidate base station 706.

Modifications, additions, or omissions may be made to the method 700 without departing from the scope of the present disclosure. For example, the operations of method 700 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the described aspects.

Some aspects described in the present disclosure may determine a probability of a HO condition prior to the HO condition occurring (e.g., a HO event occurring). The mobile device may determine the channel measurements and use the HO algorithm to determine the probability of the HO condition. The channel measurements may include the RSRP, the RSRQ, an IQ sample, a FFT measurement, or some combination thereof. Responsive to the probability of the HO condition exceeding the threshold value, the mobile device may provide the HO request message to the serving BS.

The serving BS may receive the channel measurements and use the HO algorithm to determine the probability of the HO condition. The probability of the HO condition may be further based on context information including the physical location of the mobile device, the physical speed of the mobile device, the user preference, the offset value, the hysteresis setting, or some combination thereof. Responsive to the probability of the HO condition exceeding the threshold value, the serving BS may provide the HO preparation message to the target BS.

A mobile device may include a processor. The mobile device may include user equipment. The mobile device may determine channel measurements of a serving channel and a target channel (e.g., a candidate channel). The serving channel may include a channel between the mobile device and a serving BS. The target channel may include a channel between the mobile device and a target BS (e.g., a candidate BS). The serving BS and the target BS may form part of a network.

The channel measurements may include a signal quality measurement of each of the serving channel and the target channel. The channel measurements may include an IQ sample, a FFT measurement, a pre-processed signal form of a frequency band associated with the serving channel, a pre-processed signal form of a frequency band associated with the target channel, or some combination thereof.

The mobile device may determine the probability of the HO condition. The mobile device may determine the probability of the HO condition based on the channel measurements. The mobile device may identify context information associated with the mobile device. The context information may include a physical location of the mobile device, a physical speed of the mobile device, a user preference, an offset value, a hysteresis setting, or some combination thereof. The mobile device may determine the probability of the HO condition further based on the context information.

The mobile device may identify a HO algorithm. The mobile device may also determine a triggering event for the HO condition. The mobile device may determine the triggering event based on the identified HO algorithm. The mobile device may determine the probability of the HO condition further based on the triggering event.

The mobile device may implement the HO algorithm to determine the probability of the HO condition. The mobile device may select the HO algorithm based on a cell type, a geographic area of the mobile device, a sector type, or some combination thereof.

The HO algorithm may automate trigger indication calculations of the mobile device. The mobile device may use the HO algorithm to determine the probability of the HO condition based on the channel measurements and training of the HO algorithm. The HO algorithm may also consider the context information in determining the probability of the HO condition. The HO algorithm may replace operations associated with layer 1 filtering, layer 3 filtering, a HO event calculation, calculation of HO triggering condition functions, or some combination thereof. The mobile device may infer the probability of the HO condition for each cell/sector/beam with a confidence level.

The HO algorithm may include a q learning algorithm, a deep q learning algorithm, a RNN algorithm, a reinforcement learning algorithm, a MDP algorithm, or some combination thereof.

The RNN may implement a long short-term memory network. The RNN may consider past states for current calculations. One or more weight and activation function of the RNN may be pre-defined to reduce or eliminate a vanishing gradient issue (e.g., not tracking enough previous data points or ignoring smaller data points during training). A back propagation of the RNN may be reduced for longer training convergences using pre-defined initialization values.

The reinforcement learning algorithm, q-learning algorithm, MDP algorithm, or some combination thereof may include different states that are intended to improve different aspects of the network. For example, the MDP algorithm may include a state to increase system throughput and another state to reduce HO interruption time. A learning rate and a discount factor of the HO algorithm may be selected based on performance settings of the HO algorithm. An initial condition for the q-learning may be selected considering a typical deployment condition.

The mobile device may identify a physical location of the mobile device, a cell type of the network, or some combination thereof. The mobile device may select the HO algorithm based on the physical location of the mobile device and the cell type of the network.

The mobile device may receive a training channel measurement dataset from the serving BS. The mobile device may train the HO algorithm using the training channel measurement dataset. The training channel measurement dataset may include a dataset collected over a period time. The training channel measurement dataset may include a received signal strength indicator (RSRI), a RSRP, a RSRQ, a channel quality indicator of an additional channel within the network, or some combination thereof. In addition, the training channel measurement dataset may include kinematic information corresponding to an additional mobile device within the network or to the mobile device.

The mobile device may train the HO algorithm based on a HO interruption time setting, a system throughput setting, a QOS setting, or some combination thereof. The mobile device may determine a confidence level of the probability of the HO condition. The mobile device may adjust the probability of the HO condition based on the confidence level.

The mobile device, responsive to the probability of the HO condition exceeding the threshold value, may provide a HO request message to the serving BS. The HO request message may initiate the HO process. If the target channel includes multiple channels, the mobile device may select a channel of the multiple target channels as the target channel and the corresponding target BS for the HO process.

The mobile device may receive a HO acknowledgement message from the serving BS. The HO acknowledgment message may be based on the HO request message. The mobile device may also provide subsequent data packets to the target BS via the target channel.

The mobile device, responsive to the probability of the HO condition not exceeding the threshold value, may wait for an AI interval of time to elapse. The mobile device, responsive to the AI interval of time elapsing, may determine updated channel measurements of the serving channel and the target channel.

The mobile device may determine an updated probability of the HO condition based on the updated channel measurements. The mobile device, responsive to the updated probability of the HO condition exceeding the threshold value, may provide the HO request message to the serving BS to initiate the HO process.

The serving BS may form part of a network. The serving BS may include a processor. The serving BS may receive a channel measurement dataset. The channel measurement dataset may include channel measurements of the serving channel and the target channel. The channel measurements may include the signal quality measurement of each of the serving channel and the target channel. The channel measurements may include an IQ sample, a FFT measurement, a pre-processed signal form of a frequency band associated with the serving channel, a pre-processed signal form of a frequency band associated with the target channel, or some combination thereof.

The serving BS may determine the probability of the HO condition based on the channel measurements. The serving BS may identify a HO algorithm. The serving BS may also determine a triggering event for the HO condition based on the HO algorithm. The serving BS may determine the probability of the HO condition further based on the triggering event.

The serving BS may identify context information of the mobile device. The context information may include a physical location of the mobile device, a physical speed of the mobile device, a user preference, an offset value, a hysteresis setting, or some combination thereof. The serving BS may determine the probability of the HO condition further based on the context information.

The serving BS may use the HO algorithm to determine the probability of the HO condition. The HO algorithm may include a RNN and a reinforcement learning algorithm. The HO algorithm may include a Q learning algorithm, a deep Q learning algorithm, a RNN algorithm, a reinforcement learning algorithm, a MDP algorithm, or some combination thereof.

The serving BS may identify a physical location of the mobile device, a cell type of the network, or some combination thereof. The serving BS may select the HO algorithm based on the identified physical location of the mobile device and the cell type of the network.

The serving BS may train the HO algorithm based on a HO interruption time setting, a system throughput setting, a QoS setting, or some combination thereof. The serving BS may train the HO algorithm using a training channel measurement dataset. The channel measurement dataset may include a dataset collected over a period time.

The serving BS may continuously receive the channel measurement dataset. The serving BS may also continuously train the HO algorithm using the channel measurement dataset.

The serving BS may receive the channel measurement dataset using a minimization of drive test feature. The channel measurement dataset may include a RSRI, a RSRP, a RSRQ, a channel quality indicator of an additional channel within the network, kinematic information corresponding to an additional mobile device within the network, kinematic information corresponding to the mobile device, or some combination thereof.

The serving BS may determine a confidence level of the probability of the HO condition. The serving BS may update the probability of the HO condition based on the confidence level.

The serving BS, responsive to the probability of the HO condition exceeding the threshold value, may provide a HO preparation message to the target BS. The HO preparation message may cause the target BS to prepare for the HO.

The serving BS, responsive to the probability of the HO condition not exceeding the threshold value, may wait for the AI interval of time to elapse. The serving BS, responsive to the AI interval of time elapsing, may determine updated channel measurements of the serving channel and the target channel. The serving BS may determine an updated probability of the HO condition based on the updated channel measurements. The serving BS, responsive to the updated probability of the HO condition exceeding the threshold value, may provide the HO request message to the serving BS.

Example 1 may include a mobile device including a processor configured to: determine a plurality of channel measurements of a serving channel and a candidate channel, the serving channel including a channel between the mobile device and a serving base station and the candidate channel including a channel between the mobile device and a candidate base station; determine a probability of a HO condition based on the plurality of channel measurements; and responsive to the probability of the HO condition exceeding a threshold value, provide a HO request message to the serving base station to initiate a HO process for the mobile device to connect to the candidate base station.

Example 2 may include the mobile device of example 1, wherein the plurality of channel measurements include a signal quality measurement of each of the serving channel and the candidate channel.

Example 3 may include the mobile device of example 1, wherein the plurality of channel measurements include at least one of an IQ sample, a fast Fourier transform measurement, and a pre-processed signal form of a frequency band associated with the serving channel and a frequency band associated with the candidate channel.

Example 4 may include the mobile device of example 1, wherein the processor is further configured to: identify a HO algorithm; and determine a triggering event for the HO condition based on the identified HO algorithm, wherein the probability of the HO condition is further based on the triggering event.

Example 5 may include the mobile device of example 1, wherein the processor is configured to use at least one of a ML algorithm and an AI algorithm to determine the probability of the HO condition.

Example 6 may include the mobile device of example 5, wherein the ML algorithm and the AI algorithm includes at least one of a Q learning algorithm, a deep Q learning algorithm, a recurrent neural network algorithm, a reinforcement learning algorithm, and a Markov decision process algorithm.

Example 7 may include the mobile device of example 5, wherein the processor is further configured to: identify at least one of a physical location of the mobile device and a cell type of a network; and select the ML algorithm and the AI algorithm based on the identified physical location of the mobile device and the cell type of the network.

Example 8 may include the mobile device of example 5, wherein the processor is further configured to train the ML algorithm and the AI algorithm based on at least one of a HO interruption time setting, a system throughput setting, and a quality of service setting.

Example 9 may include the mobile device of example 8, wherein: the serving base station and the candidate base station are within a network; and the processor is further configured to receive a training channel measurement dataset from the serving base station, the ML algorithm and the AI algorithm are trained using the training channel measurement dataset.

Example 10 may include the mobile device of example 9, wherein the training channel measurement dataset includes: at least one of a RSRI, a RSRP, a RSRQ, and a channel quality indicator of an additional channel within the network; and kinematic information corresponding to an additional mobile device within the network.

Example 11 may include the mobile device of example 1, wherein: the processor is further configured to identify context information including at least one of a physical location of the mobile device, a physical speed of the mobile device, a user preference, an offset value, and a hysteresis setting; and the probability of the HO condition is further based on the context information.

Example 12 may include the mobile device of example 1, wherein: the processor is further configured to determine a confidence level of the probability of the HO condition; and the probability of the HO condition is further based on the confidence level of the probability of the HO condition.

Example 13 may include the mobile device of example 1, wherein responsive to the probability of the HO condition not exceeding the threshold value, the processor is further configured to: wait for an AI interval of time to elapse; and responsive to the AI interval of time elapsing, determine a plurality of updated channel measurements of the serving channel and the candidate channel.

Example 14 may include the mobile device of example 13, wherein the processor is further configured to: determine an updated probability of the HO condition based on the plurality of updated channel measurements; and responsive to the updated probability of the HO condition exceeding the threshold value, provide the HO request message to the serving base station to initiate the HO process for the mobile device to connect to the candidate base station.

Example 15 may include the mobile device of example 1, wherein the processor is further configured to: receive a HO acknowledgement message from the serving base station based on the HO request message; and provide subsequent data packets to the candidate base station via the candidate channel.

Example 16 may include the mobile device of example 1, wherein the mobile device includes user equipment.

Example 17 may include a serving base station within a network, the serving base station including a processor configured to: receive a channel measurement dataset including a plurality of channel measurements of a serving channel and a candidate channel, the serving channel including a channel between a mobile device and the serving base station and the candidate channel including a channel between the mobile device and a candidate base station; determine a probability of a HO condition based on the plurality of channel measurements; and responsive to the probability of the HO condition exceeding a threshold value, provide a HO preparation message to the candidate base station to prepare the candidate base station for a HO process for the mobile device to connect to the candidate base station.

Example 18 may include the serving base station of example 17, wherein the plurality of channel measurements include a signal quality measurement of each of the serving channel and the candidate channel.

Example 19 may include the serving base station of example 17, wherein the plurality of channel measurements include at least one of an IQ sample, a fast Fourier transform measurement, and a pre-processed signal form of a frequency band associated with the serving channel and a frequency band associated with the candidate channel.

Example 20 may include the serving base station of example 17, wherein the processor is further configured to: identify a HO algorithm; and determine a triggering event for the HO condition based on the identified HO algorithm, wherein the probability of the HO condition is further based on the triggering event.

Example 21 may include the serving base station of example 17, wherein the processor is configured to use at least one of a ML algorithm and an AI algorithm to determine the probability of the HO condition.

Example 22 may include the serving base station of example 21, wherein the ML algorithm and the AI algorithm includes at least one of a Q learning algorithm, a deep Q learning algorithm, a recurrent neural network algorithm, a reinforcement learning algorithm, and a Markov decision process algorithm.

Example 23 may include the serving base station of example 21, wherein the ML algorithm includes at least one of a recurrent neural network and a reinforcement learning algorithm.

Example 24 may include the serving base station of example 21, wherein the processor is further configured to: identify at least one of a physical location of the mobile device and a cell type of the network; and select the ML algorithm and the AI algorithm based on the identified physical location of the mobile device and the cell type of the network.

Example 25 may include the serving base station of example 21, wherein the processor is further configured to train the ML algorithm and the AI algorithm based on at least one of a HO interruption time setting, a system throughput setting, and a quality of service setting.

Example 26 may include the serving base station of example 25, wherein the processor is configured to: continuously receive the channel measurement dataset; and continuously train the ML algorithm and the AI algorithm using the channel measurement dataset.

Example 27 may include the serving base station of example 25, wherein the processor is configured to receive the channel measurement dataset using a minimization of drive test feature.

Example 28 may include the serving base station of example 25, wherein the channel measurement dataset includes: at least one of a RSRI, a RSRP, a RSRQ, and a channel quality indicator of an additional channel within the network; and kinematic information corresponding to an additional mobile device within the network.

Example 29 may include the serving base station of example 17, wherein: the processor is further configured to identify context information including at least one of a physical location of the mobile device, a physical speed of the mobile device, a user preference, an offset value, and a hysteresis setting; and the probability of the HO condition is further based on the context information.

Example 30 may include the serving base station of example 17, wherein: the processor is further configured to determine a confidence level of the probability of the HO condition; and the probability of the HO condition is further based on the confidence level of the probability of the HO condition.

Example 31 may include the serving base station of example 17, wherein responsive to the probability of the HO condition not exceeding the threshold value, the processor is further configured to: wait for an AI interval of time to elapse; and responsive to the AI interval of time elapsing, determine a plurality of updated channel measurements of the serving channel and the candidate channel.

Example 32 may include the serving base station of example 31, wherein the processor is further configured to: determine an updated probability of the HO condition based on the plurality of updated channel measurements; and responsive to the updated probability of the HO condition exceeding the threshold value, provide the HO request message to the serving base station to initiate the HO process for the mobile device to connect to the candidate base station.

Example 33 may include a non-transitory computer-readable medium having a memory having computer-readable instructions stored thereon and a processor operatively coupled to the memory and configured to read and execute the computer-readable instructions to perform or control performance of operations including: determining a plurality of channel measurements of a serving channel and a candidate channel, the serving channel including a channel between the mobile device and a serving base station and the candidate channel including a channel between the mobile device and a candidate base station; determining a probability of a HO condition based on the plurality of channel measurements; and responsive to the probability of the HO condition exceeding a threshold value, providing a HO request message to the serving base station to initiate a HO process for the mobile device to connect to the candidate base station.

Example 34 may include the non-transitory computer-readable medium of example 33, the operations further including: identifying a HO algorithm; and determining a triggering event for the HO condition based on the identified HO algorithm, wherein the probability of the HO condition is further based on the triggering event.

Example 35 may include the non-transitory computer-readable medium of example 33, wherein the probability of the HO condition is determined using at least one of a ML algorithm and an AI algorithm.

Example 36 may include the non-transitory computer-readable medium of example 35 the operations further including: identifying at least one of a physical location of the mobile device and a cell type of a network; and selecting the ML algorithm and the AI algorithm based on the identified physical location of the mobile device and the cell type of the network.

Example 37 may include the non-transitory computer-readable medium of example 35 the operations further including training the ML algorithm and the AI algorithm based on at least one of a HO interruption time setting, a system throughput setting, and a quality of service setting.

Example 38 may include the non-transitory computer-readable medium of example 37, wherein: the serving base station and the candidate base station are within a network; and the operations further include receiving a training channel measurement dataset from the serving base station, the ML algorithm and the AI algorithm are trained using the training channel measurement dataset.

Example 39 may include the non-transitory computer-readable medium of example 33, wherein: the operations further include identifying context information including at least one of a physical location of the mobile device, a physical speed of the mobile device, a user preference, an offset value, and a hysteresis setting; and the probability of the HO condition is further based on the context information.

Example 40 may include the non-transitory computer-readable medium of example 33, wherein: the operations further include determining a confidence level of the probability of the HO condition; and the probability of the HO condition is further based on the confidence level of the probability of the HO condition.

Example 41 may include the non-transitory computer-readable medium of example 33, wherein responsive to the probability of the HO condition not exceeding the threshold value, the operations further include: waiting for an AI interval of time to elapse; and responsive to the AI interval of time elapsing, determining a plurality of updated channel measurements of the serving channel and the candidate channel.

Example 42 may include the non-transitory computer-readable medium of example 41 the operations further including: determining an updated probability of the HO condition based on the plurality of updated channel measurements; and responsive to the updated probability of the HO condition exceeding the threshold value, providing the HO request message to the serving base station to initiate the HO process for the mobile device to connect to the candidate base station.

Example 43 may include the non-transitory computer-readable medium of example 33 the operations further including: receiving a HO acknowledgement message from the serving base station based on the HO request message; and providing subsequent data packets to the candidate base station via the candidate channel.

Example 44 may include a non-transitory computer-readable medium having a memory having computer-readable instructions stored thereon and a processor operatively coupled to the memory and configured to read and execute the computer-readable instructions to perform or control performance of operations including: receiving a channel measurement dataset including a plurality of channel measurements of a serving channel and a candidate channel, the serving channel including a channel between a mobile device and the serving base station and the candidate channel including a channel between the mobile device and a candidate base station; determining a probability of a HO condition based on the plurality of channel measurements; and responsive to the probability of the HO condition exceeding a threshold value, providing a HO preparation message to the candidate base station to prepare the candidate base station for a HO process for the mobile device to connect to the candidate base station.

Example 45 may include the non-transitory computer-readable medium of example 44 the operations further including: identifying a HO algorithm; and determining a triggering event for the HO condition based on the identified HO algorithm, wherein the probability of the HO condition is further based on the triggering event.

Example 46 may include the non-transitory computer-readable medium of example 44, wherein the probability of the HO condition is determined using at least one of a ML algorithm and an AI algorithm.

Example 47 may include the non-transitory computer-readable medium of example 46 the operations further including: identifying at least one of a physical location of the mobile device and a cell type of the network; and selecting the ML algorithm and the AI algorithm based on the identified physical location of the mobile device and the cell type of the network.

Example 48 may include the non-transitory computer-readable medium of example 46 the operations further including training the ML algorithm and the AI algorithm based on at least one of a HO interruption time setting, a system throughput setting, and a quality of service setting.

Example 49 may include the non-transitory computer-readable medium of example 48, the operations further including: continuously receiving the channel measurement dataset; and continuously training the ML algorithm and the AI algorithm using the channel measurement dataset.

Example 50 may include the non-transitory computer-readable medium of example 44, wherein: the operations further include identifying context information including at least one of a physical location of the mobile device, a physical speed of the mobile device, a user preference, an offset value, and a hysteresis setting; and the probability of the HO condition is further based on the context information.

Example 51 may include the non-transitory computer-readable medium of example 44, wherein: the operations further include determining a confidence level of the probability of the HO condition; and the probability of the HO condition is further based on the confidence level of the probability of the HO condition.

Example 52 may include the non-transitory computer-readable medium of example 44, wherein responsive to the probability of the HO condition not exceeding the threshold value, the operations further include: waiting for an AI interval of time to elapse; and responsive to the AI interval of time elapsing, determining a plurality of updated channel measurements of the serving channel and the candidate channel.

Example 53 may include the non-transitory computer-readable medium of example 52 the operations further include: determining an updated probability of the HO condition based on the plurality of updated channel measurements; and responsive to the updated probability of the HO condition exceeding the threshold value, providing the HO request message to the serving base station to initiate the HO process for the mobile device to connect to the candidate base station.

Example 54 may include a system, including: means to determine a plurality of channel measurements of a serving channel and a candidate channel, the serving channel including a channel between the mobile device and a serving base station and the candidate channel including a channel between the mobile device and a candidate base station; means to determine a probability of a HO condition based on the plurality of channel measurements; and responsive to the probability of the HO condition exceeding a threshold value, they system further including means to provide a HO request message to the serving base station to initiate a HO process for the mobile device to connect to the candidate base station.

Example 55 may include the system of example 54 further including: means to identify a HO algorithm; and means to determine a triggering event for the HO condition based on the identified HO algorithm, wherein the probability of the HO condition is further based on the triggering event.

Example 56 may include the system of example 54, wherein the means to determine the probability of the HO condition include at least one of a ML algorithm and an AI algorithm.

Example 57 may include the system of example 56 further including: means to identify at least one of a physical location of the mobile device and a cell type of a network; and means to select the ML algorithm and the AI algorithm based on the identified physical location of the mobile device and the cell type of the network.

Example 58 may include the system of example 56, further including means to train the ML algorithm and the AI algorithm based on at least one of a HO interruption time setting, a system throughput setting, and a quality of service setting.

Example 59 may include the system of example 58, wherein: the serving base station and the candidate base station are within a network; and the system further including means to receive a training channel measurement dataset from the serving base station, the ML algorithm and the AI algorithm are trained using the training channel measurement dataset.

Example 60 may include the system of example 54, wherein: the system further includes means to identify context information including at least one of a physical location of the mobile device, a physical speed of the mobile device, a user preference, an offset value, and a hysteresis setting; and the probability of the HO condition is further based on the context information.

Example 61 may include the system of example 54, wherein: the system further includes determine a confidence level of the probability of the HO condition; and the probability of the HO condition is further based on the confidence level of the probability of the HO condition.

Example 62 may include the system of example 54, wherein responsive to the probability of the HO condition not exceeding the threshold value, the system further includes: means to wait for an AI interval of time to elapse; and responsive to the AI interval of time elapsing, means to determine a plurality of updated channel measurements of the serving channel and the candidate channel.

Example 63 may include the system of example 62 further including: means to determine an updated probability of the HO condition based on the plurality of updated channel measurements; and responsive to the updated probability of the HO condition exceeding the threshold value, means to provide the HO request message to the serving base station to initiate the HO process for the mobile device to connect to the candidate base station.

Example 64 may include the system of example 54 further including: means to receive a HO acknowledgement message from the serving base station based on the HO request message; and means to provide subsequent data packets to the candidate base station via the candidate channel.

Example 65 may include a system, including: means to receive a channel measurement dataset including a plurality of channel measurements of a serving channel and a candidate channel, the serving channel including a channel between a mobile device and the serving base station and the candidate channel including a channel between the mobile device and a candidate base station; means to determine a probability of a HO condition based on the plurality of channel measurements; and responsive to the probability of the HO condition exceeding a threshold value, means to provide a HO preparation message to the candidate base station to prepare the candidate base station for a HO process for the mobile device to connect to the candidate base station.

Example 66 may include the system of example 65 further including: means to identify a HO algorithm; and means to determine a triggering event for the HO condition based on the identified HO algorithm, wherein the probability of the HO condition is further based on the triggering event.

Example 67 may include the system of example 65, wherein the means to determine the probability of the HO condition includes means to use at least one of a ML algorithm and an AI algorithm.

Example 68 may include the system of example 67 further including: means to identify at least one of a physical location of the mobile device and a cell type of the network; and means to select the ML algorithm and the AI algorithm based on the identified physical location of the mobile device and the cell type of the network.

Example 69 may include the system of example 67 further including means to train the ML algorithm and the AI algorithm based on at least one of a HO interruption time setting, a system throughput setting, and a quality of service setting.

Example 70 may include the system station of example 69 further including: means to continuously receive the channel measurement dataset; and means to continuously train the ML algorithm and the AI algorithm using the channel measurement dataset.

Example 71 may include the system of example 65, wherein: the system further includes means to identify context information including at least one of a physical location of the mobile device, a physical speed of the mobile device, a user preference, an offset value, and a hysteresis setting; and the probability of the HO condition is further based on the context information.

Example 72 may include the system of example 65, wherein: the system further includes means to determine a confidence level of the probability of the HO condition; and the probability of the HO condition is further based on the confidence level of the probability of the HO condition.

Example 73 may include the system of example 65, wherein responsive to the probability of the HO condition not exceeding the threshold value, the system further includes: means to wait for an AI interval of time to elapse; and responsive to the AI interval of time elapsing, means to determine a plurality of updated channel measurements of the serving channel and the candidate channel.

Example 74 may include the system of example 73 further including: means to determine an updated probability of the HO condition based on the plurality of updated channel measurements; and responsive to the updated probability of the HO condition exceeding the threshold value, means to provide the HO request message to the serving base station to initiate the HO process for the mobile device to connect to the candidate base station.

As used in the present disclosure, terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to aspects containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although aspects of the present disclosure have been described in detail, various changes, substitutions, and alterations could be made hereto without departing from the spirit and scope of the present disclosure.

## Claims

1. A mobile device comprising a processor configured to:
determine a plurality of channel measurements of a serving channel and a candidate channel, the serving channel comprising a channel between the mobile device and a serving base station and the candidate channel comprising a channel between the mobile device and a candidate base station;
determine a probability of a handover (HO) condition based on the plurality of channel measurements; and
responsive to the probability of the HO condition exceeding a threshold value, provide a HO request message to the serving base station to initiate a HO process for the mobile device to connect to the candidate base station.

2. The mobile device of claim 1,
wherein the processor is configured to use at least one of a machine learning algorithm and an artificial intelligence algorithm to determine the probability of the HO condition;
preferably wherein the processor is further configured to:
identify at least one of a physical location of the mobile device and a cell type of a network; and
select the machine learning algorithm and the artificial intelligence algorithm based on the identified physical location of the mobile device and the cell type of the network.

3. The mobile device of claim 2,
wherein the processor is further configured to train the machine learning algorithm and the artificial intelligence algorithm based on at least one of a HO interruption time setting, a system throughput setting, and a quality of service setting;
preferably wherein the serving base station and the candidate base station are within a network; and wherein the processor is further configured to receive a training channel measurement dataset from the serving base station, the machine learning algorithm and the artificial intelligence algorithm are trained using the training channel measurement dataset;
further preferably wherein the training channel measurement dataset comprises:
at least one of a received signal strength indicator, a reference signal received power, a reference signal receive quality, and a channel quality indicator of an additional channel within the network; and
kinematic information corresponding to an additional mobile device within the network.

4. The mobile device of any one of claims 1 to 3,
wherein the processor is further configured to determine a confidence level of the probability of the HO condition; and
wherein the probability of the HO condition is further based on the confidence level of the probability of the HO condition.

5. A serving base station within a network, the serving base station comprising a processor configured to:
receive a channel measurement dataset comprising a plurality of channel measurements of a serving channel and a candidate channel, the serving channel comprising a channel between a mobile device and the serving base station and the candidate channel comprising a channel between the mobile device and a candidate base station;
determine a probability of a handover (HO) condition based on the plurality of channel measurements; and
responsive to the probability of the HO condition exceeding a threshold value, provide a HO preparation message to the candidate base station to prepare the candidate base station for a HO process for the mobile device to connect to the candidate base station.

6. The serving base station of claim 5,
wherein the processor is configured to use at least one of a machine learning algorithm and an artificial intelligence algorithm to determine the probability of the HO condition;
preferably wherein the machine learning algorithm and the artificial intelligence algorithm comprises at least one of a Q learning algorithm, a deep Q learning algorithm, a recurrent neural network algorithm, a reinforcement learning algorithm, and a Markov decision process algorithm.

7. The serving base station of claim 6,
wherein the machine learning algorithm comprises at least one of a recurrent neural network and a reinforcement learning algorithm; and/or
wherein the processor is further configured to:
identify at least one of a physical location of the mobile device and a cell type of the network; and
select the machine learning algorithm and the artificial intelligence algorithm based on the identified physical location of the mobile device and the cell type of the network.

8. The serving base station of any one of claims 6 or 7,
wherein the processor is further configured to train the machine learning algorithm and the artificial intelligence algorithm based on at least one of a HO interruption time setting and a system throughput setting or quality of service setting.

9. The serving base station of any one of claims 6 to 8,
wherein the processor is configured to:
continuously receive the channel measurement dataset; and
continuously train the machine learning algorithm and the artificial intelligence algorithm using the channel measurement dataset.

10. A non-transitory computer-readable medium having a memory having computer-readable instructions stored thereon and a processor operatively coupled to the memory and configured to read and execute the computer-readable instructions to perform or control performance of operations including:
determining a plurality of channel measurements of a serving channel and a candidate channel, the serving channel comprising a channel between the mobile device and a serving base station and the candidate channel comprising a channel between the mobile device and a candidate base station;
determining a probability of a handover (HO) condition based on the plurality of channel measurements; and
responsive to the probability of the HO condition exceeding a threshold value, providing a HO request message to the serving base station to initiate a HO process for the mobile device to connect to the candidate base station.

11. The non-transitory computer-readable medium of claim 10,
wherein the probability of the HO condition is determined using at least one of a machine learning algorithm and an artificial intelligence algorithm.

12. The non-transitory computer-readable medium of claim 11,
the operations further comprising:
identifying at least one of a physical location of the mobile device and a cell type of a network; and
selecting the machine learning algorithm and the artificial intelligence algorithm based on the identified physical location of the mobile device and the cell type of the network.

13. The non-transitory computer-readable medium of any one of claims 11 or 12,
the operations further comprising training the machine learning algorithm and the artificial intelligence algorithm based on at least one of a HO interruption time setting and a system throughput setting or quality of service setting.

14. The non-transitory computer-readable medium of any one of claims 10 to 13,
wherein the operations further comprise determining a confidence level of the probability of the HO condition; and
wherein the probability of the HO condition is further based on the confidence level of the probability of the HO condition.

15. The non-transitory computer-readable medium of any one of claims 10 to 14, the operations further comprising:
receiving a HO acknowledgement message from the serving base station based on the HO request message; and
providing subsequent data packets to the candidate base station via the candidate channel.
